# EUROPEAN PATENT SPECIFICATION

(11) **EP 1 351 473 B1**
(45) Date of publication and mention of the grant of the patent: **15.02.2006**
(21) Application number: 03006531.2
(22) Date of filing: 24.03.2003
(51) Int. Cl.: H04L 29/08, H04L 12/56, G06F 9/445

(54) **Software upgrade method for a switching device in a two-layer network environment**
Verfahren zur Softwareaufrüstung einer Vermittlungsanlage in einer zweischichtigen Netzumgebung
Procédé pour la mise-à-jour de logiciel dans un commutateur de réseau en deux couches

(30) Priority: 02.04.2002 CN 02103851
(43) Date of publication of application: 08.10.2003
(73) Proprietor: Huawei Technologies Co., Ltd., Guangdong 518057 (CN)
(72) Inventor: Mao, Guiquan, Huawei Service Centre Building, Shenzhen City, Guangdong Province 518057 (CN)
(74) Representative: Van den Heuvel, Henricus Theodorus

(56) References cited:
- EP-A- 0 811 942
- EP-A- 0 989 713
- US-A- 5 631 907
- US-A- 6 049 892
- US-A- 6 074 434
- US-A1- 2001 001 611
- US-A1- 2002 002 604

## Description

### 1. Field of the Invention

The present invention relates to a data upgrade method for a network device, particularly to a data upgrade method for a switching device in 2-layer network environment

### 2. Background of the Invention

With the rapid development of LAN, more and more network switching devices (such as Ethernet switches) are used. Because the network switching devices are distributed at different locations, data upgrade tasks for the network switching devices have to be done on site respectively, which results in high maintenance costs. To solve said problem, data upgrade tasks (such as software upgrade) for network switching devices are typically done through File Transfer Protocol (FTP) in current LAN environments. FTP includes two parts: Client FTP and Server FTP. Switching devices serve as clients, and managing devices serve as servers. Switching devices acquire data from connected managing devices and store the data into themselves to implement data upgrade.

FTP is implemented on the basis of Transfer Control Protocol or Internet Protocol (TCP/IP) and it employs two TCP links to transfer a file. Usually, a control link is opened in Client/Server method. A data link is created whenever a file is to be transferred, and then the upgrade data is downloaded from the managing device to the switching device by command/response cycles between the two devices. Because the FTP operates on the basis of TCP/IP, which works on the third layer in a network, IP addresses should be configured for the switching devices, in order to implement data upgrade for the switching devices through FTP. So, if an IP address is configured for each switching device, IP address resource will be greatly wasted.

US 6 074 434 discloses a server computer that selects code updates to download to a client computer. The server computer identifies code updates which are consistent with basic system characteristics of the client computer. Then, the server computer sends to the client computer one or more "recognizer" programs which execute in the client computer to determine whether the client computer has a version other than a current version of the consistent code updates. The client sends the results to the server computer which generates a list of those code updates which are consistent with the basic system characteristics, and represent programs that exist on the client computer for which an update would be appropriate. The server computer also identifies new data which is consistent with attributes of a user of the client computer. Then, the server computer sends to the client computer one or more recognizer programs which execute in the client computer to determine whether the client computer already has the consistent new data. The client sends the results to the server computer which generates a list of that new data which is consistent with the user attributes and not currently resident in the client computer. The server computer sends a selection form to the client computer. The client computer displays the selection form. The user selects updates from server categories or list, and the client computer sends the selection to the server. The server then returns FTP addresses for selected updates and the client computer obtains the selected updates from a content server.

US 2002/002604 discloses a method to determine, when installing a program in a terminal through the Internet, whether the program is operable or not, and notify the result of the determination to the terminal. In a system of the present invention, the operating environment of an image forming apparatus is determined, a program list showing programs operable in the operating environment is generated at a server, and the program list is supplied to the image forming apparatus. A program selected from the program list is requested from the server, and then the program is supplied from the server to the image forming apparatus. That is, a program is selected from a list of programs determined operable in the operating environment of the image forming apparatus, and is supplied to the image forming apparatus.

EP 0 811 942 discloses a system and method update client computers of various end users with software updates for software products installed on the client computers, the software products manufactured by diverse, unrelated software vendors. The system includes a service provider computer system, a number of client computers and software vendor computer systems communicating on a common network. The service provider computer system stores in an update database information about the software updates of the diverse software vendors, identifying the software products for which software updates are available, their location on the network at the various software vendor computer systems, information for identifying in the client computers the software products stored thereon, and information for determining for such products, which have software updates available. Users of the client computers connect to the service provider computer and obtain a current version of portions of the database. The client computer determines that software products stored thereon, and using this information, determines from the database, which products have updates available, based on product name and release information for the installed products. The user selects updates for installation. The selected updates are downloaded from the software vendor computer systems and installed on the client computer. Payment for the software update and the service is mediated by the service provider computer. Authentication of the user ensures only registered users obtain software updates. Authentication of the software updates ensures that the software updates are virus free and uncorrupted. Changes to the client computer during installation are monitored and archived, allowing the updates to be subsequently removed by the user.

### DISCLOSURE OF THE INVENTION

Object of the present invention is to provide a data upgrade method for a switching device in a 2-layer network environment to save IP address resource at the same time.

To obtain said object, the data upgrade method for a switching device in 2-layer network environment of the present invention comprises:
i) the switching device sends a register request message to a managing device, the managing device executes register operation to the message. After the register operation is finished successfully, the switching device shakes hands with the managing device according to the regular handshake message sent from the switching device to the managing device and the handshake response message sent from the managing device to the switching device according to the handshake message;
ii) the managing device sends a data description frame of the data to be upgraded to the switching device, and the switching device determines whether to execute data upgrade operation after receiving the message, if not, the switching device responds a data description frame response message refusing upgrade to the managing device; however, otherwise the switching device sends a data description frame response message allowing data upgrade;
iii) the managing device receives the data description frame response message and determines whether the switching device permits to upgrade; if yes, the data to be upgraded is downloaded to the switching device,
   wherein said download process comprises the following steps:
iv) the managing device sends a data frame message to the switching device; the switching device receives and stores the data frame message and responds a data frame response message, the switching device may insert a time value in the data frame response message to instruct the managing device to pause sending the subsequent data frames after receiving a data block; then the switching device writes the data received into the device load area and sends a block ending response message to the managing device;
v) the managing device continues to send the next data frame message after receiving the block ending response message, after finishing receiving the last frame of the last data block, the switching device writes the data received into the device load area and responds a load ending message to the managing device; the managing device receives the load ending message and responds a load ending response message to the switching device to end the data upgrade process.

In said method, the managing device and the switching device can exchange information through messages with a specific format (Internet Group Management Protocol, IGMP); the message comprises an Ethernet head with 802.1Q label, a public message head, and a message body.

Said data description frame of step ii) preferably contains the length of data to be loaded and the serial number of the current data block.

In step ii), when the switching device determines to permit data upgrade, it may determine the size of data block to be loaded in each upgrade cycle and then insert the parameter equaling to the data block in size in the data description frame response message before it sends the data description frame response to the managing device.

Said public message head comprises the following fields:
version number, which is used to indicate the version of current management protocol;
C, which is used to indicate whether current message is a response message or a demand message;
type, which is used to differentiate integrated management from two-layer multicast group control message;
F, which is used to identify whether the frame serial number is effective;
R, which is used to identify whether the check sum is effective;
B, which is used to identify whether the feedback word is effective;
the frame serial number, which is used to indicate message serial number according to each network switching device;
check sum, which is used to check message data;
length of message, which is used to identify length of the message;
feedback word, which is used to indicate response the untouched feedback data by message;
media access control (MAC) for switching device (LAN Switch): which is used to identify managing MAC addresses of the switching device;
the first transmitting port number, the second transmitting port number, the third transmitting port number, the fourth transmitting port number, is respectively used to record the inlet port number after messages are transmitted by the switching device;
said message body comprises:
   home command word, which is used to act as home command word of the message body;
   a sub command word, which is used to act as sub command word of the message body;
   length of content, which is used to record length of content of the message body;
   content of the managing message, which is used to record parameter and data carried in the message body.

Seen from said description, in the 2-layer network environment according to the present invention, first the switching device is preferably registered in the managing device, after the register operation is finished successfully, the switching device shakes hands with the managing device according to the regular handshake message sent from the switching device to the managing device and the handshake response message sent from the managing device to the switching according to the handshake message, during the handshake operation, the data upgrade from the managing device to the switching device is implemented. Therefore, compared to conventional data upgrade methods for network a switching device, the advantage of the present invention is that IP addresses need not necessarily be configured for the switching devices, thus data upgrade for network switching devices is realized with saving precious IP address resource in network.

### BRIEF DESCRIPTION OF THE DRAWING

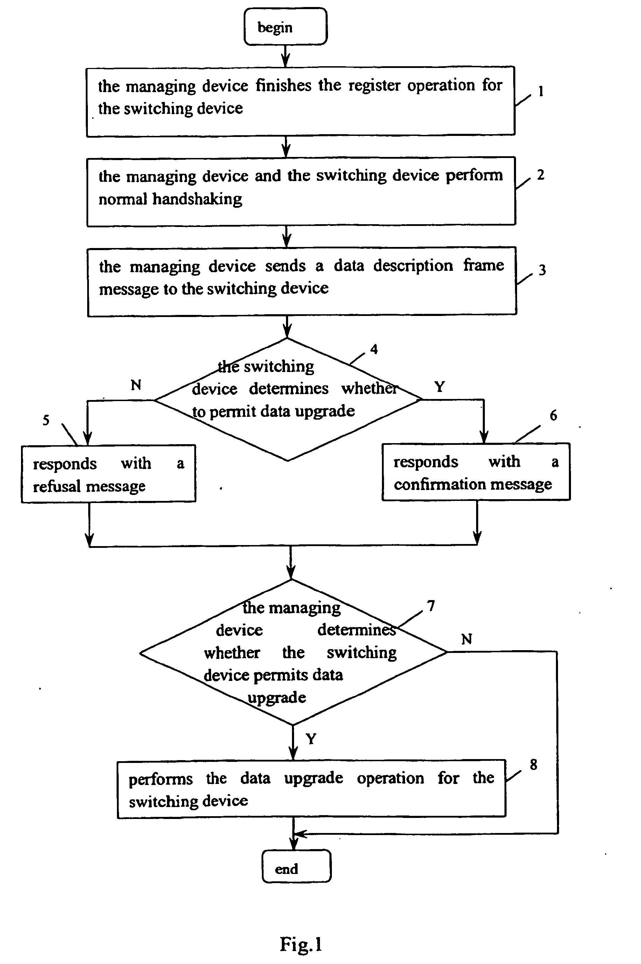

Fig.1 is the flow chart of embodiment of the method according to the present invention.

### DETAILED DESCRIPTION

The present invention will be described in further detail with reference to the exemplary embodiment shown in the drawing:

Fig.1 is the flow chart of a preferred embodiment of the method according to the present invention. According to the embodiment of Fig.1, data upgrade for switching devices in 2-layer network environments is finished. The embodiment of Fig.1 works on Client/Server mode, i.e., the managing device serves as Server, while the switching device serves as Client. Therefore, the Server software for data upgrade operates on the managing device, and the Client software operates on the switching device (such as a network switch). To facilitate the data upgrade from the managing device to the switching device by exchanging messages, the present invention provides a specific message format, which comprises 3 parts: an Ethernet head with 802.1Q label, a pubic message head, and a message body. Format of the Ethernet head is known, and now content of the public message head and the message body will be described as following:
the public message can be carried behind the Ethernet head, referring to the following table: 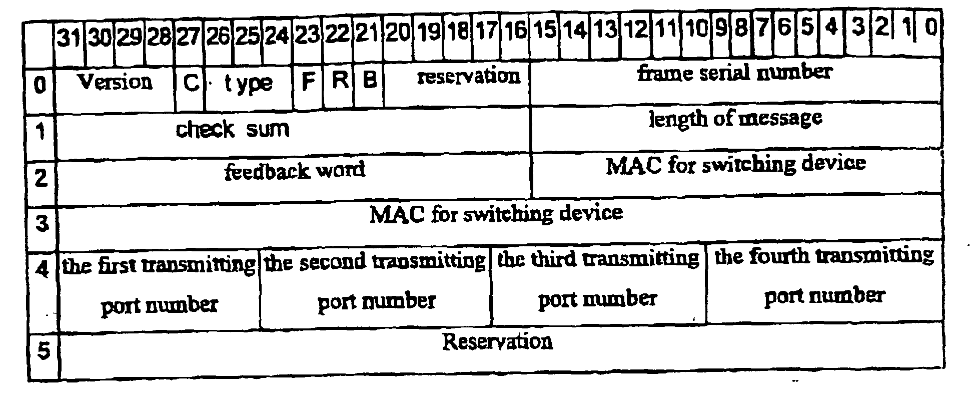
   Wherein:
   version number, 4 bits, which is used to indicate version of current managing protocol;
   C field, which is response identification, 1 bits, which is used to indicate current message is response message or command message; for example, 0-----represents command (or request), 1-----represents response (or responding);
   type field, 3 bits, which is used to differentiate between integrated management and two-layered multicast group control message; for example, 000 represents integrated management of the switching devices, 001 represents multicast transmission for the switching devices;
   F field, effective identification of the frame serial number, 1 bits, for example, the frame serial number is used when F=1;
   R field, effective identification of the check sum, 1 bits, for example, the check sum is not used when R=0; and the check sum is used when R=1;
   B field, effective identification of the feedback word, 1 bits, for example, the feedback word is not used when B=O; and the feedback word is used when B=1;
   the frame serial number field, 16 bits, which is used to identify message serial number according to each network switching device;
   length of the check sum, which is used to check message data, 16 bits, calculating method can be similar to IP and UDP, R field determines whether it is effective;
   length of message field, 16 bits, which is used to identify length of the message;
   feedback word field, which is used to indicate response the untouched feedback data by message, 16 bits, untouched feedback data when responding messages;
   media access control (MAC) for switching device, which is used to identify managing MAC address of the switching device; the third
   the first transmitting port number, the second transmitting port number, the third transmitting port number, the fourth transmitting port number, is respectively used to record the inlet port number after the messages are transmitted by the switching devices; physical positions of the switching devices can be determined by the fields. Said effective range of port number is related to the port amount of some switching device if the port amount of a switching device is PORT_NUM, when the switching device transmits the HGMP message of switching device of next layer, the range of transmitting port number is between 0 and PORT_NUM-1;
   reservation field: 4 bytes, is used to expand function of messages, for example, cascade connection layer of the switching device is more than 5, the field can be used to define the transmitting port number.

Said message body comprises the following, which is cauied under the public message in practical appliance, referring to the following table:

| | | | |
|---|---|---|---|
| home command word | sub command word | length of content | content of the message body |

Wherein:
home command word: 1 bit, which is used to act as home command word of the message body;
sub command word: 1 bit, which is used to act as sub command word of the message body;
length of content: 2 bit, which is used to record length of content of the message body;
content of the message body: which is used to record parameter and data carried in the message body, the concrete format and size change according to appliance, and the length can be determined by the field of length of content. Usually, with the limitation of length of Ethernet, the field is no more than 1468 bytes: from 0 to 1468 bytes.

Seen from above, implementing the present invention according to Fig. comprises two processes, the first is the register and handshake of switching device, through which data upgrade channel is founded between managing device and switching device; the second is the process of data upgrade which is finished by handshaking between managing device and switching device. The steps are the following:

First in step 1, the switching device broadcasts register request message including address identification of present switching device on the port connecting the managing device, the managing device turn to the operation of register after receiving the message, and sends a register response message to the switching device sending the register request message. The switching device sends regular handshake messages to the managing device in step 2 after receiving a response message indicating successful register, the managing device sends handshake response messages to the switching device after receiving the handshake messages, the switching device executes normal handshake after receiving the handshake response messages. During the handshake operation, the managing device sends a data description frame message of upgrade data to the switching device in step 3, and said data description frame message includes the length of the data to be loaded by the switching device and the serial number length of the current data block to be loaded; the switching device receives the data description frame message, and determines whether to permit data upgrade in step 4, if not, responds a data frame response message refusing upgrade to the managing device in step 5; otherwise determines the size of each block to be loaded upgrade cycle in step 6, then inserts the size parameter in the data description frame response message, and sends the data description frame response message to the managing device to confirm data upgrade; the managing device receives the data description frame message, and determines whether the switching device permits data upgrade in step 7. If yes, the managing device executes data upgrade operation in step 8, i.e., downloads the upgrade date to the switching device; otherwise end.

The download for upgrade date to the switching device in step 8 can be implemented through the following steps:
iv) the managing device sends a data frame message to the switching device; the switching device receives and stores the data frame message and responds a data frame response message, the switching device may insert a time value in the data frame response message to instruct the managing device to pause sending the subsequent data frames after receiving a data block; then the switching device writes the data received into the device load area and sends a block ending response message to the managing device;
v) the managing device continues to send the next data frame message after receiving the block ending response message, after finishing receiving the last frame of the last data block, the switching device writes the data received into the device load area and responds a load ending message to the managing device; the managing device receives the load ending message and responds a load ending response message to the switching device to end the data upgrade process.

Said data upgrade operation comprises the data upgrade processing procedure on the managing device and the upgrade data processing procedure on the switching device, said two procedure cooperate with each other. In consideration that the actual software upgrade processes has not strict requirement for upgrade speed but reliability, it is preferred to execute software upgrade on mutual control mode, i.e., each time the managing device sends a data frame, it activates a timer to wait for the response from the switching device, if the managing device receives a response from the switching device for the previous frame in specified time, it begins to send the next frame; if the managing device doesn't receive any response or receives a check error response, it resends the previous frame; if the number of repetitions exceeds specified times, an alarm is sent to the background.

Because in practice the memory size varies in different switching devices and the data volume acceptable simultaneously depends on the different switching device, therefore, the switching device shall detect the system memory size first when it receives the data description frame message from the managing device, and request to allocate an appropriate load memory in the case that normal operation of the system is not affected, and then sends the size of each data block equaling to the memory size to the managing device through the data description response frame message.

In actual data upgrade cases, the upgrade message may be initiated from the managing device or the switching device. In order to ensure the reliability of data upgrade, the initiator shall launch a timer. If the initiator does not receive a response from the opposite parry, it will resend the previous message. If the initiator does not receive any response over specified times such as 3, it will exit the load process. Therefore, in order to control the upgrade process better, in this embodiment, 5 timers (T0 - T4) are configured, wherein T0 is set to 3 seconds; T1, 3 seconds; T2, 6 seconds; T3, 6 seconds; and T4, 3 seconds.

According to said timers, first, the managing device sends a data description frame to the switching device and activate timer T0, and then waits for the response from the switching device, if it receives a response from the switching device in 3 seconds, it will take out the data block size information from the response message, and calculate the number of frames in each data block and the total number of data blocks, then the managing device launches the data load process to transfer data to the switching device. If the managing device doesn't receive any data description frame response message from the switching device in 3 seconds, it will resend the data description frame. If the repetition exceeds 2, the managing device will exit the load process and sends an alarm to the background.

In order to facilitate the data interaction during the transmission of data frames, each data frame carries the number of current data block and the serial number of current data frame. The data transmission comprises the following cases:
1. for a common data frame, the managing device will activated a 3-second timer T1 after sending a frame. If the managing device receives a correct response from the switching device in 3 seconds, it continues to send the next frame. If the managing device doesn't receive any response or receives a "check error" response, it will resend the previous frame. If the repetition exceeds twice, the managing device will exit the load process and sends an alarm to the background.
2. For the last frame of a data block, the managing device will activate a 3-second timer T1 after sending the frame, and wait for the response from the last frame. If the managing device doesn't receive any response or receives a check error message from the previous frame in 3 seconds, it will resend the previous frame. If the repetition exceeds twice, the managing device will exit the load process and sends an alarm to the background. If the managing device receives a response, it takes out the wait time T2 from the response message and activates Timer T2 to wait for the block ending message. If the managing device doesn't receive the block ending message in wait time, it will exit the load process and sends an alarm to the background; if it receives a block ending message in wait time, it will continue to send the next data block.
3. For the last frame of the last data block, the managing device will activate a 3-second timer T1 after sending the frame, and wait for the response from the last frame. If the managing device doesn't receive any response or receives a check error message from the last frame in 3 seconds, it will resend the last frame. If the repetition exceeds twice, the managing device will exit the load process and sends an alarm to the background. If the managing device receives a response, it takes out the wait time T2 from the response message and activates timer T2 to wait for the load ending message. If the managing device doesn't receive the load ending message in wait time, it will exit the load process and sends an alarm to the background; however, if it receives a load ending message in wait time, it will respond the switching device with a load ending responsion message, display the load result, and end the load process.

At the switching device side, the switching device receives the data description frame from the managing device, takes out the data, and verifies its validity. If the data is invalid, the switching device responds the managing device with an error message at once, and exits the load process. If the data is valid, the switching device detects the system memory size, requests for an appropriate load memory size, inserts the load memory size information as the size for each data block in the data description response name, and sends the frame back to the managing device and activates timer T3. It the switching device doesn't receive any data information from the managing device in T3, it will exit the load process.

When the switching device receives a common data frame, it stops timer T3, and determines whether the block number and serial number of data frame are expected ones. If the block number is correct but the frame number is identical to the previous one, it indicates that the managing device doesn't receive the previous response and thus resent the previous frame. In this case, the switching device needs only to resend the previous data frame response message and activate timer T3, if either block number or frame number is incorrect, the switching device will send a frame error response message and activate timer T3; if both block number and frame number are correct, the switching device may:
1. if the data frame received is the last frame of the last block, the switching device verifies the correctness of data according to the check sum. If error, it responds an error data frame responsion directly and activates timer T3; if correct, it responds a correct data responsion and fills the wait time in the responsion message. And the data is copied into the load cache and the last data block is written into load area of the device. If the write operation fails, the switching device sends a load ending message with an failing flag, and exits the load process. If the write operation succeeds, the switching device sends a load ending message with a successful flag to the managing device and activates timer T4; if it receives a load ending response message in T4, it will stop T4 and exit the load process; if it doesn't receive the response message in T4, it will resend load ending message. If the repetition exceeds twice, the switching device will exit the load process.
2. when the switching device receives the last data frame of a data block except for the last data block, first, the switching device verifies the correctness of data according to the check sum. If error, it responds an error data frame responsion directly and activates timer T3; if correct, it fills the wait time and responds a correct data frame responsion message, copies the data into the cache and the data block into the device load area, respectively. If the write operation fails, the switching message sends a data block ending message with an failing flag and exits the load process; if the write operation succeeds, the switching device sends a data block ending message with a success flag and activate timer T4. If the switching device receives a new data frame sent from the managing device in T4, it stops timer T4 and processes the next data block; otherwise it will resend the data block ending message and activate timer T4; if the repetition exceeds twice, the switching device will exit the load process.
3. When the switching device receives a common data frame, it verifies the correctness of data according to the check sum. If correct, it loads the data into the cache and responds the managing device with a correct data frame response and activate timer T3; if error, it responds an error data frame responsion and activate timer T3; if the switching device doesn't receive any data from the managing device in T3, it indicates that communication interrupted, exits the load process, and executes the register again.

In the embodiment of Fig.1. the data description frame message, data description frame response message, data frame message, data frame response message, ending response messages, load ending message, and load ending response message for the data upgrade process are encapsulated in the message bodies of HGMP messages. The detailed structure of the messages comprises:
1. data description frame message:
   data length (ulDataLen): describes the total length of the upgrade data;
   number of frames (usFrameNum): describes the total number of frames of the upgrade data;
   load serial number (usLoadSerial): describes the serial number of the load process;
   load command word (ucLoadCmd): describes the home command word, for example, 0 - upgrade application program; 1 - upgrade boot program;
   load parameters (ucParam[50]): describes the attached parameters;
      In addition, in the embodiment, frame-by-frame mode is used for CRC check for data, and each data frame carries 16-bit CRC check-bit.
      Load parameters can carry different parameters according to different home command words. For example, the command word of the upgrade program may carry name of the program and type, etc.
2. data description frame response message for data upgrade:
   data description result (ucDataDescResult): describes the frame result, for example, 0 - enable load; 1- disable load;
   block size (usBlockSize): describes the size of the data block to be loaded;
   load serial number (usLoadSerial): describes the serial number of load process;
3. data frame message for data upgrade:
   load serial number (usLoadSerial): describes the serial number of load process;
   block number (ucBlockNo): describes number of the load data block;
   frame number (usFrameNo): describes number of the data frame;
   CRC (usCRC): describes the CRC for the current data frame, frame-by-frame mode is used to check only the load data;
   frame length (usLen): describes the length of the current data frame;
   data (ucData[1024]): describes the load data content;
4. data frame response message for data upgrade:
   load serial number (usLoadSerial): describes the serial number of load process;
   block number (ucBlockNo): describes number of the load data block;
   frame number (usFrameNo): describes number of the responded frame;
   load result (ucLoadResult): describes the data frame load result for upgrade data, for example, 0 - correct; 1 - error, etc;
   wait time (ucWaitTime): describes the time interval between data frames, for example, between common data frames, ucWaitTime = 0, the managing device may send the next data frame at once; when the block ends, the wait time has to be longer due to the delay time resulted in writing block data into the device load area. In the wait time, if the managing device receives a block ending message, it will send the next data block; otherwise it will exit the load process and sends an alarm.
5. block ending message for data upgrade:
   load serial number(usLoadSerial): describes the serial no. of load process;
   block number (ucBlockNo): describes the data block number;
   load result (ucLoadResult): describes the data frame load result, for example, 0 - correct; 1 - error;
6. load ending message for data upgrade:
   load serial number (usLoadSerial); describes the serial number of load process;
   load result (ucLoadResult): describes load result of the data block, for example, 0 - correct; 1 - error, etc;
7. load end response message for data upgrade:
   load serial number (usLoadSerial): describes the serial number of load process;

## Claims

1. A data upgrade method for a switching device in a layer-2 network environment, comprising:
i) the switching device sending (1) a register request message to a managing device, the managing device executing register operation upon receiving the register request message, after the register operation being finished successfully, the switching device handshaking (2) with the managing device according to a handshake message sent from the switching device to the managing device and a handshake response message sent from the managing device to the switching according to the handshake message;
ii) the managing device sending (3) a data description frame of the data to be upgraded to the switching device, and the switching device determining (4) whether to execute data upgrade operation after receiving the data description frame, if not, the switching device responding (5) with a data description frame response message refusing to upgrade to the managing device; otherwise the switching device sending (6) a data description frame response message allowing data upgrade;
iii) the managing device receiving the data description frame response message and determining (7) whether the switching device permits to upgrade; if so, the data to be upgraded being downloaded to the switching device,
wherein said data download process of step ii) further comprising the following steps:
iv) the managing device sending a data frame message to the switching device; the switching device receiving and storing the data frame message and responding with a data frame response message, the switching device inserting a time value in the data frame response message to instruct the managing device to pause sending the subsequent data frame messages after receiving a data block; then the switching device writing the data received into a device load area and sending a block ending response message to the managing device;
v) the managing device continuing to send the next data frame message after receiving the block ending response message, after finishing receiving the last data frame message of the last data block, the switching device writing the data received into the device load area and responding with load ending message to the managing device; the managing device receiving the load ending message and responding with a load ending response message to the switching device to end the data upgrade process.

2. A data upgrade method for a switching device in a layer-2 network environment according to claim 1, wherein said data description frame of step (ii) comprising the length of the data to be loaded and the serial number of the current data block

3. A data upgrade method for a switching device in a layer-2 network environment according to claim 2, wherein in step ii), when the switching device decides to upgrade data, determining the size of data blocks to be loaded in each upgrade cycle and then inserting the parameter equaling to the data block size in the data description frame response message before sending the data description frame response message to the managing device.

4. A data upgrade method for a switching device in a layer-2 network environment according to claim 1, 2 or 3, wherein
said data upgrade processing procedure on the managing device comprising:
vi) the managing device sending the data description frame message to the switching device, if the managing device receiving the data description frame response from the switching device in specified time, processing to step vii), otherwise resending the data description frame message, if the repetition exceeding specified times, ending the upgrade operation;
vii) the managing device calculating the number of data frames for each data block and the total number of data Mocks according to the data block size sent each time and activating the data download process;
viii) after sending a data frame message, if the managing device receives the correct data frame response from the switching device in specified time, continuing to send the next data frame message, otherwise resending the data frame message, if the repetition exceeding specified times, the managing device terminating the upgrade operation;
ix) after sending the last data frame of a data block each time, if the managing device receives the correct data frame response and that for the data block from the switching device in specified time, the managing device continuing to send the next data block; otherwise resending the data frame message if the repetition exceeds specified times, the managing device terminating the upgrade operation;
x) after sending the last data frame message for the last data block, if the managing device receives the correct data frame response and the load ending response message, the managing device notifying the switching device of the end of data download and ending the upgrade operation; otherwise the managing device resending the data frame message, if the repetition exceeds specified times, the managing device terminating the upgrade operation, if the managing device does not receive a load ending response message, the managing device terminating the upgrade operation;
said date upgrade process on the switching device further comprising;
xi) after the switching device receives the data description frame message from the managing device, if the data is valid, the switching device allocating a memory space and responding with the size of the memory space as the size of the data blocks to be downloaded to the managing device;
xii) when receiving a common data frame message, if the data is erroneous, the switching device responding to the managing device with a data frame error message; if the data is valid, the switching device copying the data to a cache and responding the managing device with a data frame correct response message; if the switching device doesn't receive any data from the managing device in specified time, indicating the communication process being interrupted and exiting the load process, and then beginning the register process;
xiii) when receiving the last data frame for the last data block, the switching device verifying the check sum of the data, if the data is erroneous, the switching device responding to the managing device with an data frame error response message, if the data is correct, the switching device responding to the managing device with a data frame correct response message and then copying the data into the cache and writing data of the last block into the device load area, if the write operation fails, the switching device sending a load ending message with a failure flag to the managing device and exiting the download process; if the write operation succeeds, the switching device responding a load ending message with a success flag to the managing device, if receiving a load ending responsion message in specified time, the switching device exiting the load process; otherwise the switching device resending the load ending message, if the times of resending the load ending message exceeds specified value, the switching device exiting the download process;
xiv) when the switching device receives the last data frame of a data block except the last data block, if the data is erroneous, the switching device responding to the managing device with an data frame error response message, otherwise the switching device responding to the managing device with a data frame correct response message and then copying the data into the device load area, if the write operation fails, the switching message sending a block ending message with an error flag and exiting the load process, if the write operation succeeds, the switching device responding to a block ending message with a success flag to the managing device, if receiving a new data frame sent from the managing device in specified time, the switching device processing the next data block; otherwise the switching device resending the block ending message, if the amount of resending block ending messages exceeds a specified value, the switching device exiting the download process.

5. A data upgrade method for a switching device in a layer-2 network environment according to claim 1, 2, 3 or 4, wherein the managing device and the switching device exchanging information through messages with a specific format, the message comprising three parts, wherein the first part is a labeled Ethernet head, the second part is a public message head, and the third part is a message body;
said public message head comprising the following fields:
version number, indicating the version of current management protocol;
C, indicating whether current message is a response message or a demand message;
type, differentiating integrated management from two-layer multicast group control message;
F, identifying whether the frame serial number is effective;
R, identifying whether the check sum is effective;
B, identifying whether the feedback word is effective;
the frame serial number, indicating message serial number according to each network switching device;
check sum, checking message data;
length of message, identifying the length of the message;
a feedback word, indicating the untouched data which is fed back by the response message;
media access control MAC, for switching device, LAN Switch: identifying the managing MAC addresses of the switching device;
the first transmitting port number, the second transmitting port number, the third transmitting port number, the fourth transmitting port number, respectively recording the inlet port number after messages are transmitted by the switching device;
said message body comprising:
home command word, being used as home command word of the message body; sub command word, being used as sub command word of the message body;
length of content, recording the length of content of the message body;
content of the message part, recording the parameter and data are carried in the message body.

6. A data upgrade method for a switching device in a layer-2 network environment according to claim 5, wherein the data description frame message, data description frame response message, data frame message, data frame response message, ending message, load ending message, and load ending response message for the data upgrade process being encapsulated in the message bodies for IGMP messages.

## Patentansprüche

1. Ein Verfahren zur Datenaufrüstung einer Vermittlungsanlage in einer zweischichtigen Netzumgebung, die Folgendes umfasst:
i) die Vermittlungsanlage sendet (1) eine Registeranforderungsmeldung an eine Managementeinrichtung, die Managementeinrichtung führt bei Empfang der Registeranforderungsmeldung eine Registeroperation durch, nachdem die Registeroperation erfolgreich beendet ist, tritt die Vermittlungsanlage in Signalaustausch (2) mit der Managementeinrichtung entsprechend einer Handshakemeldung, die von der Vermittlungsanlage zur Managementeinrichtung gesendet wird, und eine Handshakeantwortmeldung wird entsprechend der Handshakemeldung von der Managementeinrichtung zur Vermittlungsanlage gesendet;
ii) die Managementeinrichtung schickt (3) einen Datenbeschreibungsrahmen der aufzurüstenden Daten zur Vermittlungsanlage und die Vermittlungsanlage entscheidet (4), ob nach dem Empfang des Datenbeschreibungsrahmens eine Softwareaufrüstung durchgeführt werden soll, falls nicht, antwortet (5) die Vermittlungsanlage der Managementeinrichtung mit einer Antwortmeldung auf den Datenbeschreibungsrahmen, mit dem die Aufrüstung verweigert wird; andernfalls sendet (6) die Vermittlungsanlage eine Antwortmeldung, die das Datenupgrade erlaubt;
iii) die Managementeinrichtung empfängt die Antwortmeldung auf den Datenbeschreibungsrahmen und entscheidet (7), ob die Vermittlungsanlage eine Aufrüstung zulässt; falls ja, werden die aufzurüstenden Daten zur Vermittlungsanlage übertragen,
wobei besagter Übertragungsvorgang der Daten von Schritt ii) weiterhin die folgenden Schritte umfasst:
iv) die Managementeinrichtung sendet eine Datenrahmenmeldung zu der Vermittlungsanlage; die Vermittlungsanlage empfängt und speichert die Datenrahmenmeldung und antwortet mit einer Datenrahmen-Antwortmeldung, die Vermittlungsanlage fügt in die Datenrahmen-Antwortmeldung einen Zeitwert ein, um der Managementeinrichtung die Anweisung zu geben, mit der Übermittlung der folgenden Datenrahmenmeldungen nach Erhalt eines Datenblocks zu pausieren; dann schreibt die Vermittlungsanlage die empfangenen Daten in einen dafür reservierten Speicherbereich und sendet an die Managementeinrichtung eine Blockendemeldung;
v) nach dem Empfang der Blockendemeldung fährt die Managementeinrichtung mit dem Versenden des nächsten Datenrahmens fort, nachdem der Empfang des letzten Datenrahmens von dem letzten Datenblock beendet ist, schreibt die Vermittlungsanlage die empfangenen Daten in den dafür reservierten Speicherbereich und antwortet der Managementeinrichtung mit einer Ladeendemeldung; die Managementeinrichtung empfängt die Ladeendemeldung und antwortet der Vermittlungsanlage mit einer Ladeende-Antwortmeldung, um die Datenaufrüstung zu beenden.

2. Ein Verfahren zum Softwareupgrade einer Vermittlungsanlage in einer zweischichtigen Netzumgebung nach Anspruch 1, wobei besagter Datenbeschreibungsrahmen von Schritt ii) die zu übertragende Datenlänge und die Seriennummer des aktuellen Datenblocks enthält.

3. Ein Verfahren zur Datenaufrüstung einer Vermittlungsanlage in einer zweischichtigen Netzumgebung nach Anspruch 2, wobei in Schritt ii), wenn die Vermittlungsanlage entscheidet, die Daten aufzurüsten, die Größe der Datenblöcke bestimmt wird, die in jedem Aufrüstungszyklus geladen werden sollen, und anschließend den Parameter, der der Datenblockgröße gleichkommt, in den Datenbeschreibungsantwortrahmen einfügt, bevor der Datenbeschreibungsantwortrahmen zu der Managementeinrichtung gesendet wird.

4. Ein Verfahren zur Datenaufrüstung einer Vermittlungsanlage in einer zweischichtigen Netzumgebung nach Anspruch 1, 2 oder 3, wobei
besagter Vorgang der Datenaufrüstung der Managementeinrichtung Folgendes umfasst:
vi) die Managementeinrichtung sendet den Datenbeschreibungsrahmen zu der Vermittlungsanlage, falls die Managementeinrichtung den Datenbeschreibungsantwortrahmen von der Vermittlungsanlage innerhalb einer festgelegten Zeit empfängt, beginnt die Bearbeitung nach Schritt vii), anderenfalls wiederholtes Versenden des Datenbeschreibungsrahmens, falls die Wiederholung festgelegte Zeiten überschreitet, wird das Aufrüsten beendet;
vii) die Managementeinrichtung berechnet für jeden Datenblock die Anzahl der Datenrahmen und die Gesamtzahl der Datenblöcke entsprechend der Datenblockgröße, die jeweils gesendet wird, und aktiviert die Datenaufrüstung;
viii) nach dem Senden eines Datenrahmens, falls die Managementeinrichtung den korrekten Datenantwortrahmen von der Vermittlungsanlage in der festgelegten Zeit empfängt, wird mit dem Versenden des nächsten Datenmeldungsrahmens fortgefahren, anderenfalls erneutes Senden des Datenmeldungsrahmens, falls die Wiederholung festgelegte Zeiten überschreitet, beendet die Managementeinrichtung den Aufrüstungsvorgang;
ix) jedes Mal nach dem Senden des letzten Datenrahmens eines Datenblocks, falls die Managementeinrichtung von der Vermittlungsanlage in festgelegter Zeit die korrekte Datenrahmenantwort und diejenige für den Datenblock empfängt, setzt die Managementeinrichtung das Versenden des nächsten Datenblocks fort; andernfalls erneutes Versenden des Datenmeldungsrahmens, falls die Wiederholung festgesetzte Zeiten überschreitet, beendet die Managementeinrichtung die Datenaufrüstung;
x) nachdem der letzte Datenmeldungsrahmen für den letzten Datenblock gesendet wurde, falls die Managementeinrichtung den korrekten Datenantwortrahmen und die Ladeendemeldung empfängt, benachrichtigt die Managementeinrichtung die Vermittlungsanlage über das Ende des Datendownloads und beendet den Aufrüstungsvorgang; andernfalls sendet die Managementeinrichtung den Datenmeldungsrahmen erneut, falls die Wiederholung festgesetzte Zeiten überschreitet, beendet die Managementeinrichtung den Aufrüstungsvorgang, falls die Managementeinrichtung keine Ladeendemeldung empfängt, beendet die Managementeinrichtung den Aufrüstungsvorgang;
besagter Datenaufrüstungsprozess an der Vermittlungsanlage umfasst ferner:
xi) nachdem die Vermittlungsanlage den Datenbeschreibungsrahmen von der Managementeinrichtung empfangen hat, falls die Daten gültig sind, ordnet die Vermittlungsanlage einen Speicherplatz zu und antwortet mit der Größe des Speicherplatzes als der Größe der zur Managementeinrichtung zu übertragenen Datenblöcke;
xii) wenn ein allgemeiner Datenrahmen empfangen wird, falls die Daten fehlerhaft sind, antwortet die Vermittlungsanlage der Managementeinrichtung mit einem Datenfehlerrahmen; falls die Daten gültig sind, kopiert die Vermittlungsanlage die Daten in einen Cache und antwortet die Managementeinrichtung mit einem Datenkorrektrahmen; falls die Vermittlungsanlage innerhalb eines festgesetzten Zeitraums keinerlei Daten von der Managementeinrichtung empfängt, bedeutet dies, dass der Kommunikationsprozess unterbrochen ist, und der Ladeprozess wird verlassen, und dann beginnt der Registerprozess;
xiii) wenn der letzte Datenrahmen für den letzten Datenblock empfangen wird, verifiziert die Vermittlungsanlage die Kontrollsumme der Daten, falls die Daten fehlerhaft sind, antwortet die Vermittlungsanlage der Managementeinrichtung mit einem Datenfehlerrahmen, falls die Daten korrekt sind, antwortet die Vermittlungsanlage der Managementeinrichtung mit einem Datenkorrektrahmen und kopiert dann die Daten in den Cache und schreibt die Daten des letzten Blocks in den dafür reservierten Speicherbereich, der so genannten "load area", falls die Schreiboperation missglückt, sendet die Vermittlungsanlage zu der Managementeinrichtung eine Ladeendemeldung mit einem Fehlerflag und verlässt den Downloadprozess; wenn die Schreiboperation erfolgreich ist, antwortet die Vermittlungsanlage der Managementeinrichtung mit einer Ladeendemeldung mit einem Erfolgflag, falls eine Ladeendeantwort in festgesetzter Zeit empfangen wird, verlässt die Vermittlungsanlage den Downloadprozess; andernfalls sendet die Vermittlungsanlage die Ladeendemeldung erneut, falls die Zeit der erneuten Sendung der Ladeendemeldung einen festgesetzten Wert überschreitet, verlässt die Vermittlungsanlage den Ladeprozess;
xiv) wenn die Vermittlungsanlage den letzten Datenrahmen eines Datenblocks empfängt mit Ausnahme des letzten Datenblocks, falls die Daten fehlerhaft sind, antwortet die Vermittlungsanlage der Managementeinrichtung mit einem Datenfehlerrahmen, andernfalls antwortet die Vermittlungsanlage der Managementeinrichtung mit einem Datenkorrektrahmen und kopiert dann die Daten in den dafür reservierten Speicherbereich (load area), falls die Schreiboperation missglückt, sendet die Vermittlungsanlage eine Blockendemeldung mit einem Fehlerflag und verlässt den Ladeprozess, falls die Schreiboperation erfolgreich ist, antwortet die Vermittlungsanlage der Managementeinrichtung auf eine Blockendemeldung mit einem Erfolgflag, falls ein neuer Datenrahmen empfangen wird, der von der Managementeinrichtung in festgesetzter Zeit gesendet wird, verarbeitet die Vermittlungsanlage den nächsten Datenblock; andernfalls sendet die Vermittlungsanlage die Blockendemeldung erneut, falls die Anzahl der erneut gesendeten Blockendemeldungen einen festgesetzten Wert überschreitet, verlässt die Vermittlungsanlage den Ladeprozess.

5. Ein Verfahren zur Datenaufrüstung Softwareupgrade einer Vermittlungsanlage in einer zweischichtigen Netzumgebung nach Anspruch 1, 2, 3 oder 4, wobei die Managementeinrichtung und die Vermittlungsanlage durch Meldungen in einem bestimmten Format Informationen austauschen, die Meldung umfasst drei Teile, wobei der erste Teil ein gekennzeichneter Ethernetkopf ist, der zweite Teil ein öffentlicher Nachrichtenkopf ist, und der dritte Teil ein Nachrichtenkörper ist;
besagter öffentliche Nachrichtenkopf umfasst die folgenden Felder:
Versionsnummer, zeigt die Version des gegenwärtigen Managementprotokolls an;
C, zeigt an, ob die gegenwärtige Nachricht eine Antwort- oder eine Anfragenachricht ist;
Typ, unterscheidet integriertes Management von einer zweischichtigen Multicast-Gruppenkontrollnachricht;
F, zeigt an, ob die Rahmenseriennummer wirksam ist;
R, zeigt an, ob die Kontrollzahl wirksam ist;
B, zeigt an, ob das Feedbackwort wirksam ist;
die Rahmenseriennummer, zeigt die Seriennummer der Nachricht gemäß jeder Vermittlungsanlage des Netzwerks an;
Kontrollsumme, kontrolliert die Nachrichtendaten;
Nachrichtenlänge, zeigt die Länge der Nachricht an;
ein Feedbackwort, zeigt die unberührten Daten an, die von der Antwortmeldung zurückgeführt werden;
Medien-Zugriffssteuerung, MAC, für Vermittlungsanlage, LAN-Schalter: zeigt die Verwaltungs-MAC-Adressen der Vermittlungsanlage an;
die erste Übertragungs-Portnummer, die zweite Übertragungs-Portnummer, die dritte Übertragungs-Portnummer, die vierte Übertragungs-Portnummer, zeichnen jeweils die Nummern der Eingänge auf, nachdem Nachrichten von der Vermittlungsanlage übertragen sind;
besagter Nachrichtenkörper umfasst:
Home-Kommandowort, wird verwendet als Ausgangs-Befehlwort der Nachricht;
Sub-Kommandowort, wird verwendet als Unterbefehlwort der Nachricht;
Inhaltslänge, zeichnet die Gesamtlänge der Nachricht auf;
Inhalt des Nachrichtenteils, zeichnet die Parameter und Daten auf, die in die Nachricht übertragen werden.

6. Ein Verfahren zur Datenaufrüstung einer Vermittlungsanlage in einer zweischichtigen Netzumgebung nach Anspruch 5, wobei der Datenbeschreibungsrahmen, Datenbeschreibungsantwortrahmen, Datenrahmen, Datenantwortrahmen, Endemeldung, Ladeendemeldung und Ladeendeantwortmeldung für das Softwareupgrade in die Nachricht für IGMP-Nachrichten eingeschlossen sind.

## Revendications

1. Procédé de mise à jour de données pour un dispositif de commande dans un environnement réseau à couche liaison de données, comprenant les étapes suivantes :
i le dispositif de commande envoie (1) un message de demande d'enregistrement à un dispositif de gestion, ledit dispositif de gestion exécute l'opération d'enregistrement dès réception du message de demande d'enregistrement, après que l'opération d'enregistrement a été accomplie avec succès, le dispositif de commande établit une liaison (2) avec le dispositif de gestion, conformément à un message d'établissement d'une liaison envoyé par le dispositif de commande au dispositif de gestion et un message de réponse d'établissement d'une liaison envoyé par le dispositif de gestion au dispositif de commande conformément au message d'établissement d'une liaison,
ii le dispositif de gestion envoie (3) au dispositif de commande un cadre de description de données des données à mettre à jour et le dispositif de commande décide (4) d'exécuter ou non l'opération de mise à jour des données après réception du cadre de description des données, sinon, le dispositif de commande répond (5) au dispositif de gestion par un message de réponse de cadre de description de données refusant la mise à jour et, dans le cas contraire, le dispositif de commande envoie (6) un message de réponse de cadre de description de données autorisant la mise à jour,
iii le dispositif de gestion reçoit le message de réponse de cadre de description de données et détermine (7) si le dispositif de commande autorise la mise à jour, si oui, les données à mettre à jour sont téléchargées vers le dispositif de commande, la procédure de téléchargement des données de l'étape 2) comportant les étapes suivantes :
iv le dispositif de gestion envoie un message de cadre de données au dispositif de commande, le dispositif de commande reçoit et enregistre le message de cadre de données et répond par un message de réponse de cadre de données, le dispositif de commande insère une valeur de temps dans le message de réponse de cadre de données, pour commander au dispositif de gestion d'interrompre l'envoi des messages de cadre de données suivants après réception d'un bloc de données, puis le dispositif de commande inscrit les données reçues dans une zone de chargement du dispositif et envoie un message de réponse de fin de bloc au dispositif de gestion,
v le dispositif de gestion envoie le message de cadre de données suivant après avoir reçu le message de réponse de fin de bloc, après avoir fini de recevoir le dernier message de cadre de données du dernier bloc de données, le dispositif de commande inscrit les données reçues dans la zone de chargement du dispositif et répond par un message de fin de chargement au dispositif de gestion, le dispositif de gestion recevant le message de fin de chargement et répondant par un message de réponse de fin de chargement au dispositif de commande pour terminer la procédure de mise à jour des données.

2. Procédé de mise à jour de données pour un dispositif de commande dans un environnement réseau à couche liaison de données selon la revendication 1, dans lequel le cadre de description de données de l'étape 2) comporte la longueur de données à charger et le numéro de série du bloc de données en cours de traitement.

3. Procédé de mise à jour de données pour un dispositif de commande dans un environnement réseau à couche liaison de données selon la revendication 2, dans lequel, à l'étape 2), lorsque le dispositif de commande décide de mettre à jour les données, il détermine la taille des blocs de données à charger à chaque cycle de mise à jour et insère alors le paramètre correspondant à la taille du bloc de données dans le message de réponse du cadre de description de données avant d'envoyer ce message de réponse du cadre de description de données au dispositif de gestion.

4. Procédé de mise à jour de données pour un dispositif de commande dans un environnement réseau à couche liaison de données selon l'une quelconque des revendications 1, 2 et 3, dans lequel la procédure de mise à jour des données sur le dispositif de gestion comporte les étapes suivantes :
6) le dispositif de gestion envoie le message de cadre de description de données au dispositif de commande, si le dispositif de gestion reçoit la réponse de cadre de description de données du dispositif de commande dans le délai spécifié, on passe à l'étape 7), sinon le dispositif renvoie le message de cadre de description de données et, si le nombre de répétitions dépasse des valeurs spécifiées, le dispositif de gestion met fin à l'opération de mise à jour,
7) le dispositif de gestion calcule le nombre de cadres de données pour chaque bloc et le nombre total de blocs de données d'après la taille de blocs de données envoyée chaque fois et active la procédure de téléchargement des données,
8) après l'envoi d'un message de cadre de données, si le dispositif de gestion reçoit la réponse de cadre de données correcte du dispositif de commande dans le délai spécifié, il envoie le message de cadre de données suivant, sinon, il renvoie le message de cadre de données et, si le nombre de répétitions dépasse des valeurs spécifiées, le dispositif de gestion met fin à l'opération de mise à jour,
9) après l'envoi du dernier cadre de données de chaque bloc de données, si le dispositif de gestion reçoit la réponse de cadre de données correcte et cela pour le bloc de données du dispositif de commande dans le délai spécifié, le dispositif de gestion envoie le bloc suivant, sinon, le dispositif renvoie le message de cadre de données et, si le nombre de répétitions dépasse des valeurs spécifiées, le dispositif de gestion met fin à la procédure de mise à jour,
10) après l'envoi du dernier message de cadre de données du dernier bloc de données, si le dispositif de gestion reçoit le message de cadre de données correct et le message de réponse de fin de chargement, le dispositif de gestion avertit le dispositif de commande de la fin du téléchargement des données et met fin à l'opération de mise à jour, sinon, le dispositif de gestion renvoie le message de cadre de données et, si le nombre de répétitions dépasse des valeurs spécifiées, le dispositif de gestion met fin à la procédure de mise à jour et, si le dispositif de gestion ne reçoit pas de message de réponse de fin de chargement, le dispositif de gestion met fin à l'opération de mise à jour,
ladite procédure de mise à jour de données sur le dispositif de commande comprenant également les étapes suivantes :
11) après que le dispositif de commande reçoit le message de cadre de description de données du dispositif de gestion, si les données sont valides, le dispositif de commande attribue un espace mémoire et répond au dispositif de gestion, la taille de cet espace mémoire étant égale à la taille des blocs de données à télécharger,
12) à la réception d'un message de cadre de données ordinaire, si les données sont erronées, le dispositif de commande répond au dispositif de gestion par un message d'erreur de cadre de données, si les données sont valides, le dispositif de commande copie ces données dans une mémoire cache et répond au dispositif de gestion par un message de réponse de cadre de données correct, si le dispositif de commande ne reçoit pas de données du dispositif de gestion dans le délai spécifié, il indique que la communication a été interrompue et il termine la procédure de chargement, puis débute la procédure d'enregistrement,
13) lorsqu'il reçoit le dernier cadre de données du dernier bloc de données, le dispositif de commande vérifie la somme de contrôle des données, si les données sont erronées, le dispositif de commande répond au dispositif de gestion par un message de réponse d'erreur de cadre de données, si les données sont correctes, le dispositif de commande répond au dispositif de gestion par un message de réponse de cadre de données correct, puis copie les données dans la mémoire cache et inscrit les données du dernier bloc dans la zone de chargement du dispositif, si l'opération échoue, le dispositif de commande envoie un message de fin de chargement avec un fanion d'erreur au dispositif de gestion et termine la procédure de téléchargement, si l'opération réussit, le dispositif de commande répond par un message de fin de chargement avec un fanion de réussite au dispositif de gestion, s'il reçoit un message de réponse de fin de chargement dans le délai spécifié, le dispositif de commande termine la procédure de chargement, sinon, le dispositif de commande renvoie le message de fin de chargement et, si le nombre de répétitions du message de fin de chargement dépasse une valeur spécifiée, le dispositif de commande termine la procédure de téléchargement,
14) lorsque le dispositif de commande reçoit le dernier cadre de données d'un bloc de données à l'exception du dernier bloc de données, si les données sont erronées, le dispositif de commande répond au dispositif de gestion par un message de réponse d'erreur de cadre de données, sinon, le dispositif de commande répond au dispositif de gestion par un message de réponse de cadre de données correct, puis copie les données dans la zone de chargement du dispositif, si l'opération échoue, le dispositif de commande envoie un message de fin de bloc avec un fanion d'erreur et termine la procédure de chargement, si l'opération réussit, le dispositif de commande répond au dispositif de gestion par un message de fin de bloc avec un fanion de réussite, s'il reçoit un nouveau cadre de données envoyé par le dispositif de gestion dans le délai spécifié, le dispositif de commande traite le bloc de données suivant, sinon, le dispositif de commande renvoie le message de fin de bloc et, si le nombre de répétitions du message de fin de bloc dépasse une valeur spécifiée, le dispositif de commande termine la procédure de téléchargement.

5. Procédé de mise à jour de données pour un dispositif de commande dans un environnement réseau à couche liaison de données selon l'une quelconque des revendications 1, 2, 3 et 4, dans lequel le dispositif de gestion et le dispositif de commande échangent des informations par l'intermédiaire de messages d'un format spécifique, ces messages comportant trois parties, la première étant un en-tête Ethernet étiqueté, la deuxième un en-tête de messagerie et la troisième un corps de message,
l'en-tête de messagerie comprenant les champs suivants :
• le numéro de version indiquant la version du protocole de gestion en cours,
• C, qui indique si le message en cours est un message de réponse ou un message de demande,
• le type, qui distingue la gestion intégrée du message de contrôle de groupe de multidiffusion de couche de liaison de données,
• F, qui identifie si le numéro de série du cadre est efficace,
• R, qui identifie si la somme de contrôle est efficace,
• B, qui identifie si le mot de retour est efficace,
• le numéro de série de cadre, qui indique le numéro de série du message d'après chaque dispositif de commande du réseau,
• la somme de contrôle, qui contrôle les données de message,
• la longueur du message, qui identifie la longueur du message,
• le mot de retour, qui indique les données non modifiées retournées par le message de réponse,
• le contrôle d'accès média, MAC, pour le dispositif de commande, LAN Switch, qui identifie les adresses MAC de gestion du dispositif de commande,
• le numéro du premier port de transmission, le numéro du second port de transmission, le numéro du troisième port de transmission, le numéro du quatrième port de transmission, qui enregistrent le numéro de port d'entrée après que les messages sont transmis par le dispositif de commande,
le corps de message comprenant :
• le mot de commande principal, qui sert de mot de commande principal du corps de message,
• le mot de commande secondaire, qui sert de mot de commande secondaire du message principal,
• la longueur du contenu, qui enregistre la longueur du contenu du corps de message,
• le contenu de la partie message, qui enregistre que les paramètres et données sont contenus dans le corps de message.

6. Procédé de mise à jour de données pour un dispositif de commande dans un environnement réseau à couche liaison de données selon la revendication 5, dans lequel le message de cadre de description de données, le message de réponse de cadre de description de données, le message de cadre de données, le message de réponse de cadre de données, le message de fin, le message de fin de chargement et le message de réponse de fin de chargement de la procédure de mise à jour sont encapsulés dans les corps de message de messages IGMP.
